# FASCICULE DE BREVET EUROPEEN

(11) **EP 1 125 004 B1**
(45) Date de publication et mention de la délivrance du brevet: **28.07.2004**
(21) Numéro de dépôt: 99950609.0
(22) Date de dépôt: 04.10.1999
(51) Int. Cl.: C23F 13/04

(54) **SYSTEME DE PROTECTION ACTIVE A COURANT IMPOSE CONTRE LA CORROSION DE DES RESERVOIRES DE CHAUFFE-EAU ET D'APPAREILS SIMILAIRES**
FREMDSTROM-KORROSIONSSCHUTZ-SYSTEM FÜR WASSERERHITZER-GEFÄSSE UND GLEICHARTIGE APPARATE
SYSTEM WITH SELECTED CURRENT LEVEL FOR ACTIVE PROTECTION AGAINST CORROSION OF THE VESSEL OF A WATER HEATER OR SIMILAR APPLIANCES

(30) Priorité: 07.10.1998 BE 9800725
(43) Date de publication de la demande: 22.08.2001
(73) Titulaire: MTS Technical S.A., 5020 Malonne (BE)
(72) Inventeur: XHONNEUX, Alain, B-5020 Malonne (BE)
(74) Mandataire: Guareschi, Antonella
(86) Numéro de dépôt international: PCT/EP1999/007339
(87) Numéro de publication internationale: WO 2000/020659

(56) Documents cités:
- DE-C- 3 707 791
- DE-U- 9 002 952
- US-A- 4 219 807
- US-A- 4 592 818

## Description

La présente invention se réfère à un système de protection active à courant imposé contre la corrosion des réservoires de chauffe-eau et d'appareils similaires.

Cette invention à été conçue en prêtant une attention toute particulière, meme si ce n'est pas exclusivement, au secteur des chauffe-eau à usage domestique, à usage des communautés ou à usage industriel. L'invention peut être appliquèe avec autant d'efficacité aussi bien sur des chauffe-eau à gaz que sur des chauffe-eau électriques, ainsi que sur des systèmes à chauffage indirect, c'est-à dire avec échangeur de chaleur à serpentin ou à double enveloppe.

N'importe quel récipient métallique destiné à contenir de l'eau est soumis à l'action corrosive de cet élément.

Les chauffe-eau qui comprennent des récipients en acier nécessitent, par conséquent, des dispositifs adéquats pour limiter ce phénomène d'érosion, même si ces récipients sont souvent revêtus d'une couche de protection. La solution proposée le plus souvent est celle d'un dispositif pour la protection cathodique, anode à courant imposé, obtenue au moyen d'un procédé galvanique, suivant lequel une électrode, qui remplit la fonction d'une anode, est parcourue par un courant électrique.

Dans les documents US 4.407.711, EP 0 630 426 et DE 39 16 847 sont proposées des solutions comprenant une anode à courants imposés, suivant lesquelles l'alimentation du circuit de l'anode est fournie directement par le courant du réseau. Cette méthode peut créer de graves problèmes, soit en cas de coupure de courant, soit au cas où le courant du réseau ne pourrait etre utilisé que durant certaines tranches de temps de la journée.

Un tel inconvénient est éliminé grâce à la solution illustrée dans le document EP 0 771 889, qui comporte l'adoption d'un accumulateur, leque, en l'absence du courant du réseau, peut fournir le courant nécessaire pour maintenir le procédé galvanique. Cet appareil présente cependant quelques inconvénients: la nécessité d'utiliser l'accumulateur pour fournir du courant même en présence du courant du réseau et le nombre de cycles de chargement et de déchargement auxquels est soumis ledit accumulateur. La fréquence de ces cycles diminue inévitablement la vie de l'accumulateur, et en cas d'accumulateurs industriels intégrés dans le circuit, elle augmente les coûts d'entretien.

L'objectif de la présente invention est de résoudre les problèmes d'alimentation du circuit électronique en fournissant un accumulateur qui ne fonctionne qu'en l'absence du courant du réseau et grâce à un générateur de tension, au lieu de courant, pour fournir la différence de potentiel nécessaire pour maintenir un courant de polarisation entre l'anode et le réservoir utilisé.

Un autre objectif de la présente invention est de faciliter le contrôle de l'efficacité du dispositif de protection, soit au moyen de signaux lumineux, soit par l'utilisation des principes physiques d'un générateur de tension.

Un autre objectif de la présente invenction est de faciliter les opérations d'entretien en équipant le dispositif de protection d'un accumulateur que l'on trouve facilement sur le marché et que l'on peut monter sans problèmes grâce à de simples opérations manuelles.

Un autre objectif de la prèsente invenction est de réaliser un dispositif de protection qui soit simple et économique à fabriquer.

Afin d'atteindre les objectifs susmentionnés, l'invention a pour objet un système de protection active à courant imposé contre la corrosion des réservoires de chauffe-eau et d'appareils similaires ayant les caractéristiques indiquées dans les revendications qui suivent.

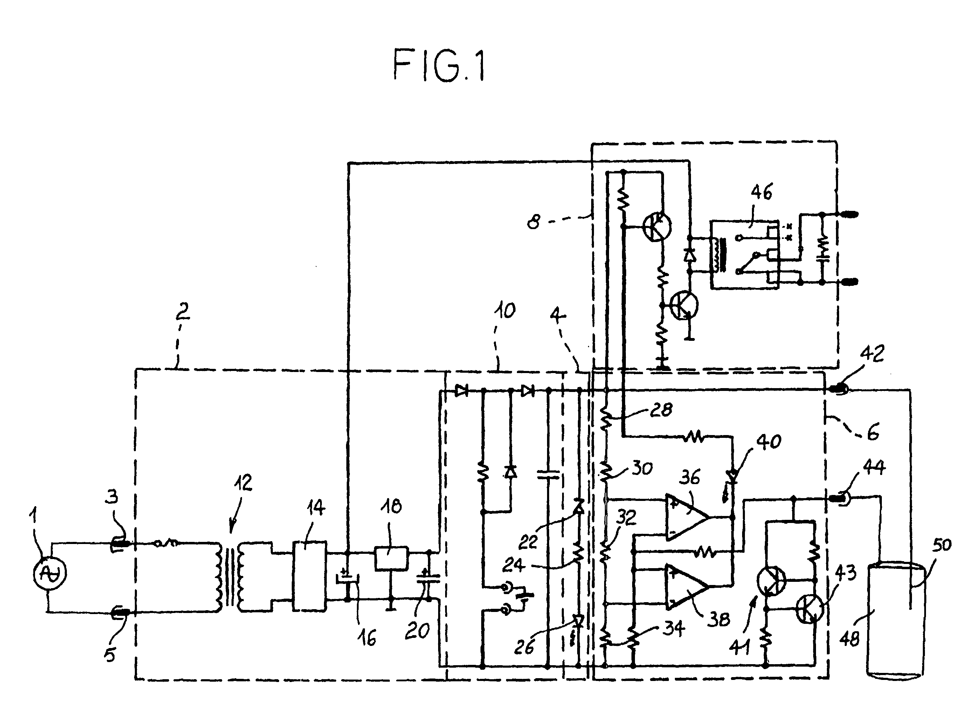

On pourra découvrir d'autres caractéristiques et d'autres avantages de cette invention grâce à la description détaillée qui suit concernant un exemple particulier de réalisation, laquelle se réfère à la figure annexée, qui est faite simplement à titre d'exemple non limitatif, et qui illustre un diagramme du circuit électronique de protection active.

Un système de protection active à courant imposé contre la corrosion des réservoires de chauffe-eau et d'appareils similaires comprend un réservoir h8, un circuit électronique et un bloc d'accumulateur auxiliaire 10. Le réservoir h8 contient un fluide conducteur dans lequel est plongée une électrode 50. Le circuit électronique comprend un bloc d'alimentation 2 pour le courant du réseau, un bloc accumulateur 10 et un bloc stabilisateur de tension 4, un bloc de contrôle de protection 6 et un bloc de sécurité 8.

Le bloc d'alimentation 2, connecté à une alimentation extérieure 1 au moyen de bornes 3 et 5, comprend des éléments de type connu, tels un trasformateur 12 pour l'abaissement de la tension, un trasformateur de tension 14, obtenu, par exemple, mais non exclusivement, avec un pont à diodes, un filtre à condensateur 16, un stabilisateur de tension 18 et un élément capacitatif 20.

Le bloc accumulateur 10, conçu pour recevoir un accumulateur de type connu et facile à trouver sur le marché, est placé en circuit parallèle au circuit d'alimentation 2, de façon telle qu'il soit exclu de l'alimentation du circuit électronique quand le courant électrique extérieur 1 est présent.

Le bloc stabilisateur de tension 4 comprend une diode Zener 22, une résistance 24 et un voyant lumineux 26 servant à signaler la présence de la tension d'alimentation.

Le bloc de contrôle 6 comprend une série de résistances 28, 30, 32, 34, deux amplificateurs opérationnels 36, 38, un voyant lumineux 40 servant à signaler des problèmes dans le dispositif de protection active, deux transistors BJT 41, 43, une borne de sortie 42 connectée à l'électrode 50 et une borne de sortie 44 connectée au réservoir 48.

Le bloc de sécurité 8 comprend un relais 46 à deux voies (ouvert, fermé) qui peut être de type monophasé ou bien de type triphasé, et qui permet d'interrompre l'alimentation d'un élément chauffant du chauffe-eau, comme par exemple une résistance électrique, un brûleur ou un circulateur du circuit primaire par un serpentin, de manière telle que l'utilisateur puisse se rendre compte d'un façon claire (manque d'eau chaude) de la défectuosité, et d'interrompre également l'alimentation du système de protection en cas d'effet protecteur insuffisant contre la corrosion par le circuit électronique.

Quand il fonctionne, le système de protection active est alimenté par une source de force électromotrice extérieure alternée 1, comme par exemple celle du réseau. Cette source extérieure 1 sert en même temps à charger l'accumulateur auxiliaire. Si la tension de la source extérieure 1 vient à manquer, l'alimentation du circuit électronique est fournie par l'accumulateur auxiliaire.

A l'entrée du bloc de contrôle 6, le bloc stabilisateur 4 assure une tension de polarisation constante de la borne 42 et, par conséquent, de l'electrode 50, de façon telle que cette dernière remplit la fonction d'une anode à l'intérieur du réservoir 48.

Dans des conditions opérationnelles normales, donc, les deux bornes 42, 44 et, par conséquent, l'anode 50 et le réservoir 48, sont maintenus à une différence de potentiel suffisante pour fournir au chauffe-eau une protection active contre la corrosion.

Pour contrôler si le système de protection active fonctionne correctement, on doit surveiller la différence de potentiel entre les deux bornes 42 et 44, en utilisant la fonction comparative des deux amplificateurs opérationnels 36 et 38.

Si la différence de potentiel dépasse un certain seuil de sécurité établi à l'avance, il est possible que la résistance offerte par le liquide qui se trouve dans le réservoir soit trop élevée et que, pour cette raison, le circuit ne soit pas en mesure d'offrir la protection nécessaire. Une autre possibilité est que le réservoir soit vide. Une autre possibilité encore est que le circuit soit interrompu par la ropture d'un câble ou la défaillance d'une connexion. Naturellement, ces deux conditions sont anormales et dangereuses. Si, par contre, la différence de potentiel est inférieure à un deuxième seuil de sécurité, il est possible que la résistance offerte par le liquide qui ser trouve dans le réservoir h8 soit anormalement basse ou qu'il y ait eu un court-circuit à l'intérieur dudit reservoir, avec de graves risques de conséquences qui pourraient même être fatales. De toute façon, dans ces conditions-ci également, le système ne fonctionne pas correctement et il faut interrompre toute operation.

Dans de telles situations la tension présente à l'entrée du bloc de sécurité 8 est supérieure à celle qui est présente à la sortie du bloc de contrôle 6, ce qui fait que le relais 45 se déclenche en interrompant l'alimentation de l'élément chauffant et du dispositif de protection. Le voyant lumineux 40 s'allume alors, signalant une anomalie.

## Revendications

1. Système de protection active contre la corrosion d'un réservoir d'un chauffe-eau, ledit système comprenant, en combinaison:
- un réservoir (48) d'un chauffe-eau, ledit réservoir étant susceptible de contenir un fluide conducteur dans lequel est plongée une électrode (50);
- un circuit électronique ayant un bloc d'alimentation (2), une première borne (44) destinée à être connectée électriquement au réservoir (48) et une deuxième borne (42) destinée à être connectée életriquement à ladite électrode (50) pour la polariser, ledit circuit électronique comprenant au moins un bloc de stabilisation de la tension de polarisation (4) connecté à ladite deuxième borne (42), et un bloc de contrôle (6) servant à dèceler la différence de potentiel entre la première borne (44) et la deuxième borne (42), à la comparer avec au moins une valeur de tension de seuil dèterminée à l'avance, à émettre un signal de référence au dépassement deladite valeur de seuil; la différence de potentiel entre lesdites première et deuxième borne étant comparée avec deux valeurs de tension de seuil déterminées à l'avance, respectivement inférieure et supérieure par rapport à un champ de fonctionnement correct du système de protection;
- un bloc d'accumulateur (10) compris dans ledit circuit électronique,
**caractérisé par le fait que** ledit bloc d'accumulateur auxiliaire (10) est placé en circuit parallèle au bloc d'alimentation (2) dudit circuit électronique.

2. Système selon la revendication 1, **caractérisé par le fait que** le bloc d'accumulateur (10) comprend un accumulateur extérieur au circuit électronique.

3. Système selon les revendications 1 et 2, **caractérisé par le fait que** le bloc d'accumulateur auxiliaire (10) comprend un générateur de tension, ledit générateur étant susceptible de fournir la différence de potentiel nécessaire pour maintenir un courant de polarisation entre l'anode (50) et le réservoir (48).

4. Système selon les revendications 1, 2 et 3, **caractérisé par le fait que** ledit circuit électronique comprend une résistance de limitation du courant fourni par l'accumulateur.

5. Procedé pour la protection active contre la corrosion d'un réservoir d'un chaffe-eau, **caractérisé par le fait que**, dans la condition d'alimentation par le courant de réseau, un bloc d'accumulateur auxiliaire (10) contenant un générateur de tension est alimenté, en même temps de tout un circuit électronique dans lequel ledit bloc d'accumulateur est contenu, par une alimentation extérieure (1); le bloc d'accumulateur auxiliare-(10) fournit, grâce au dit générateur de tension, la différence de potentiel nécessaire à le maintien d'un courant de polarisation entre un électrode (50) et un relatif réservoir (48) seulement en l'absence du courant de réseau; ledit bloc d'accumulateur auxiliaire étant en circuit paralléle à un bloc d'alimentation (2).

## Claims

1. An active protection system against the corrosion of a boiler tank, said system comprising, combined together:
- a tank (48) of a boiler, said tank being able to contain a conducting fluid in which an electrode (50) is immersed;
- an electronic circuit including a supply block (2), a first terminal (44) designed to be connected electrically to the tank (48) and a second terminal (42) designed to be connected electrically to the said electrode (50) for the purpose of polarizing it, said electronic circuit comprising at least one stabilization block for the polarization voltage (4) connected to said second terminal (42), and a monitoring block (6) designed to reveal the difference in the potential between the first terminal (44) and the second terminal (42), to compare it with at least one predetermined threshold voltage value, to emit a reference signal when said threshold value is exceeded; the difference in the potential between said first and second terminal being compared with two predetermined voltage threshold values, respectively less and greater than a correct operating range of the protection system;
- an accumulator block (10) comprised in said electronic circuit,
**characterised by** the fact that said auxiliary accumulator block (10) is located on a parallel circuit to the supply block (2) of said electronic circuit.

2. A system according to claim 1, **characterised by** the fact that the accumulator block (10) comprises an accumulator external to the electronic circuit.

3. A system according to claims 1 and 2, **characterised by** the fact that the auxiliary accumulator block (10) comprises a current generator, said generator being designed to provide the difference in potential necessary to maintain a polarization current between the anode (50) and the tank (48).

4. A system according to claims 1, 2 and 3, **characterised by** the fact that said electronic circuit comprises a limitation resistor for the current supplied by the accumulator.

5. A procedure for active protection against the corrosion of a boiler tank, **characterised by** the fact that, if the power is supplied by the main network, the auxiliary accumulator block (10) containing a current generator is supplied, contemporaneously with an electronic circuit in which said accumulator block is contained, by an external supply (1); the auxiliary accumulator block (10) supplies, thanks to said current generator, the difference in potential necessary to maintain the polarization voltage between the electrode (50) and the relating tank (48) only when there is no current power supply from the main network; said auxiliary accumulator blocks being on a circuit parallel to the supply block (2).

## Patentansprüche

1. Aktives Schutzsystem gegen Korrosion eines Wasserheiztanks, wobei das genannte System miteinander kombiniert umfasst:
- einen Tank (48) eines Wasserheizgeräts, wobei der besagte Tank in der Lage ist, eine Leitflüssigkeit zu enthalten, in die eine Elektrode (50) eingetaucht wird;
- einen elektronischen Kreislauf, der einen Speisungsblock (2), eine erste Klemme (44), die elektrisch an den Tank (48) angeschlossen werden kann, und eine zweite Klemme (42), die zur Polarisierung elektrisch an die besagte Elektrode (50) angeschlossen werden kann, umfasst; der besagte elektronische Kreislauf umfasst zumindest einen Block zur Stabilisierung der Polarisierungsspannung (4), der an die besagte zweite Klemme (42) angeschlossen ist, und einen Kontrollblock (6), der dazu geeignet ist, das Potenzialdifferenzial zwischen der ersten Klemme (44) und der zweiten Klemme (42) festzustellen, es mit zumindest einem vorausbestimmten Schwellenspannungswert zu vergleichen und bei der Überschreitung des Schwellwerts ein Signal abzugeben; das Potenzialdifferenzial zwischen der besagten ersten und der besagten zweiten Klemme wird mit zwei vorausbestimmten Spannungswerten verglichen, einem oberen und einem unteren, bezogen auf den ordnungsgemäßen Betriebsbereich des Schutzsystems;
- einen Akkumulatorblock (10), der im besagten elektrischen Kreislauf enthalten ist,
**gekennzeichnet durch** die Tatsache, dass der besagte zusätzliche Akkumulatorblock (10) parallel an den Speisungsblock (2) des besagten elektronischen Kreislaufs angeschlossen ist.

2. System gemäß Anspruch 1, **gekennzeichnet durch** die Tatsache, dass der Akkumulatorblock (10) einen Akkumulator außerhalb des elektronischen Kreislaufs umfasst.

3. System gemäß den Ansprüchen 1 und 2, **gekennzeichnet durch** die Tatsache, dass der zusätzliche Akkumulatorblock (10) einen Stromgenerator umfasst, wobei der besagte Generator in der Lage ist, das Potenzialdifferenzial zu liefern, das zur Aufrechterhaltung eines Polarisierungsstroms zwischen der Anode (50) und dem Tank (48) erforderlich ist.

4. System gemäß den Ansprüchen 1, 2 und 3, **gekennzeichnet durch** die Tatsache, dass der besagte elektronische Kreislauf einen Widerstand zur Begrenzung des vom Akkumulator gelieferten Stroms umfasst.

5. Verfahren für den aktiven Schutz gegen Korrosion eines Wasserheiztanks, **gekennzeichnet durch** die Tatsache, dass, die Speisung **durch** das Stromnetz, der zusätzliche Akkumulatorblock (10), der einen Stromgenerator enthält, gleichzeitig mit einem elektronischen Kreislauf, in dem der besagte Akkumulatorblock enthalten ist, von einer externen Speisung (1) gespeist wird; der zusätzliche Akkumulatorblock (10) liefert dank des besagten Stromgenerators das Potenzialdifferenzial, das nur bei einem Ausfall des Stromnetzes zur Aufrechterhalten einer Polarisierungsspannung zwischen der Elektrode (50) und dem entsprechenden Tank (48) erforderlich ist; der besagte zusätzliche Akkumulatorblock ist mit dem Speisungsblock (2) parallel geschaltet.
